# EUROPEAN PATENT SPECIFICATION

(11) **EP 3 430 068 B1**
(45) Date of publication and mention of the grant of the patent: **04.01.2023**
(21) Application number: 16894762.0
(22) Date of filing: 18.03.2016
(51) Int. Cl.: C08G 59/50, C08G 63/193, C08L 63/00, C09J 163/00, C09D 163/00

(54) **BPA FREE SPRAYABLE EPOXY RESIN**
BPA-FREIES SPRÜHBARES EPOXIDHARZ
RÉSINE ÉPOXY PULVÉRISABLE SANS BPA

(43) Date of publication of application: 23.01.2019
(73) Proprietor: Warren Environmental & Coating, LLC, Middleborough, MA 02346 (US)
(72) Inventor: WARREN, Danny, Carver, MA 02330 (US)
(74) Representative: EIP
(86) International application number: PCT/US2016/023131
(87) International publication number: WO 2017/160310

(56) References cited:
- WO-A1-2012/170370
- WO-A1-2014/078218
- US-A1- 2008 197 526
- US-A1- 2008 197 526
- US-A1- 2011 218 270
- US-A1- 2012 328 811
- US-A1- 2013 225 788
- US-A1- 2013 225 788
- US-A1- 2014 001 029

## Description

### BACKGROUND OF THE INVENTION

The present invention generally relates to a BPA free epoxy resin that is suitable for spray application. More specifically, the present invention relates to a BPA free epoxy resin material that is particularly spray application in a manner that allows a high coating build while also maintaining a viscosity characteristic that prevents sagging of the coating to facilitate single coat application.

Generally, epoxy coatings are well known in the art and due to their exceptional durability and structural properties epoxy based protective coatings have gained commercial acceptance as protective and decorative coatings for use on a wide variety of materials. For example, epoxy based protective coatings represent one of the most widely used methods of corrosion control. They are used to provide long term protection of steel, concrete, aluminum and other structures under a broad range of corrosive conditions, extending from atmospheric exposure to full immersion in highly corrosive environments. Further, epoxy coatings are readily available and are easily applied by a variety of methods including spraying, rolling and brushing. They adhere well to steel, concrete and other substrates, have low moisture vapor transmission rates and act as barriers to water, chloride and sulfate ion ingress, provide excellent corrosion protection under a variety of atmospheric exposure conditions and have good resistance to many chemicals and solvents. As a result, numerous industries including maintenance, marine, construction, architectural, aircraft and product finishing have adopted broad usage of epoxy coating materials.

The most common material utilized in the epoxy coating industry today is a multi-part epoxy material. In general the epoxy includes a first base resin matrix formed from a bisphenol material such as bisphenol A (BPA) and at least a second catalyst or hardener, although other components such as a pigment agent or an aggregate component may also be added. While the two parts remain separate, they remain in liquid form. After the two parts are mixed together, they begin a curing process that is typically triggered by exposure to heat, humidity or a ultra-violet light source, whereby the mixed material quickly begins to solidify. As a result, it is necessary to mix only a sufficient amount of compound such that it can be worked effectively before set up occurs. Accordingly, the use and application of these compounds is a tedious, slow and expensive proposition.

These epoxy products, like most prior art coatings, has been difficult to use due to the preferred method of spray application. When attempting to spray apply an epoxy, two drawbacks are encountered. First, the material cannot be mixed in large batches prior to application because of the short pot life of the material. Accordingly, it must be mixed on an as needed basis immediately prior to spray application. Second, the naturally viscous consistency of the mixed epoxy material is not well suited for spray application. To thin the epoxy to the consistency required for typical prior art spray application, the epoxy must be loaded with a large percent by volume of solvent. Such a solvent typically contains high level of volatile organic compounds (VOC) whose primary function is to lower viscosity thereby providing a consistency suitable for spray application with conventional air, airless and electrostatic spray equipment. The addition of the solvent to the epoxy coating material in turn greatly increases the VOC content of the epoxy coating material and reduces the build thickness of the finished and cured coating.

The further difficulty is that the preferred BPA material based on its viscosity and build properties has fallen greatly out of favor because of the possibility that the material will leach from the coatings. Accordingly, a coating composition for use on the inside of water distribution lines, storage tanks, tunnels and the like must be approved for direct food contact. To meet these requirements, the coating should be free of any material which might migrate into the materials transmitted in the distribution system. Furthermore, the coating should have enough flexibility for the structure to undergo natural expansion and contraction without damaging the coating. Finally, such a material must be able to be spray applied in a single coat high build pass without sagging.

However, many current commercial coating compositions comprise epoxy resins which are manufactured from bisphenol A (BPA) resulting in a coating that contains some residual amount of bisphenol A. BPA is known for its influence on the endocrine system. Therefore the industry has reviewed the use of BPA containing materials in such coatings and has required the use of substantially BPA free coatings.

Accordingly, some advancement in applications technology has been developed. Among them are systems for controlling mixing and viscosity. While these systems have provided great advancements in use of some sealing compounds, there is still great room for improvement.

One example of an improvement discloses a spray application system and method for a two-part, self-setting compound, and provides needed advancement of application technology, opportunities for improvement remain. For example, in some instances, multiple coats of compound may be required. More specifically, due to the nature of a mixture of compounds that may be in use, a desired finish may not be attainable if the compounds are applied too thickly. Applying multiple coats necessarily requires additional time and energy, and therefore can be costly.

In contrast, attempts to apply a thick coating typically result in slumping of compound and may require considerable rework. In some environments, such as with underground piping, misapplication can be virtually disastrous.

In view of the foregoing, there is a need for a BPA free composition that can be spray-applied. Further, there is a need for a method and system for spray applying a BPA free composition that is particularly adapted for delivering the components of the composition at a temperature that promotes their spray application as well as a self-setting reaction.

US 2008/197526 A1 discloses epoxy composites which are prepared by separately preheating an epoxy resin and a hardener; mixing the preheated epoxy resin and preheated hardener to form a hot reaction mixture and curing the hot reaction mixture in the presence of a reinforcement until the mixture cures to form a composite having a polymer phase with a glass transition temperature of at least 150° C.

### BRIEF SUMMARY OF THE INVENTION

The invention is defined in the claims. In this regard, the present invention relates to a composition and method for a spray applied BPA free two-part, self-setting composition adapted for delivering the components of the composition at a temperature that promotes their spray application at a proper viscosity as well as inducing a self-setting reaction.

In one embodiment, a self-setting BPA free epoxy coating compound is adapted for curing in place once applied. The self-curing compound includes a multi-part compound which, upon a mixing of the parts, chemically reacts and cures.

Therefore, it is an object of the present invention to provide a spray-applied BPA free two-part, self-setting composition that exhibits desired properties such as a high build non-sag coating. Further, there is an object of the present invention to provide a spray-applied BPA free two-part, self-setting composition and is particularly adapted for delivering the components of the composition at a temperature that promotes their spray application as well as a self-setting reaction.

These together with other objects of the invention, along with various features of novelty which characterize the invention, are pointed out with particularity in the claims annexed hereto and forming a part of this disclosure. For a better understanding of the invention, its operating advantages and the specific objects attained by its uses, reference should be had to the accompanying drawings and descriptive matter in which there is illustrated a preferred embodiment of the invention.

### DETAILED DESCRIPTION OF THE INVENTION

Disclosed herein is a composition and method for a spray applied BPAfree two-part, self-setting composition adapted for delivering the components of the composition at a temperature that promotes their spray application at a proper viscosity as well as inducing a self-setting reaction.

In one embodiment, a self-setting BPA free epoxy coating compound is adapted for curing in place once applied. The self-curing compound includes a multi-part compound which, upon a mixing of the parts, chemically reacts and cures.

Epoxy technology and methods of curing and reacting with amine-based hardeners have continued to evolve since the first epoxies were developed in the 1930s. The possible reactions combined with wide-ranging formulation additives have resulted in a myriad of products and a wide range of environmental factors that must be considered when choosing a protective coating system.

There are three types of epoxy resins that find application in the coating of water transport systems bisphenol A, bisphenol F, and novolac resins. These resins all result from reactions of epichlorohydrin with phenolic compounds. The type and number of phenolic groups determine both physical and performance properties of the cured resin.

Bisphenol A is a reaction product of phenol and acetone. Bisphenol A is reacted with epichlorohydrin to form diglycidylether bisphenol A resin or DGEBA. The resultant epoxy resin is a liquid with a honey-like consistency. DGEBA is most often used in solvent-free coatings and flooring systems. The molecular weight of the formulation is increased by adding more bisphenol A to liquid DGEBA to form semi-solid or solid resins. These resins are cut in solvent to allow their use as maintenance primers for steel or as corrosion-resistant films. Bisphenol A however is problematic in that it has been shown to leach significant pyproducts into the transported material.

Bisphenol F is similar to bisphenol A except phenol is reacted with formaldehyde rather than acetone. The resultant phenolic chemical does not have the two methyl groups that are present between the ring structures in bisphenol A resins. Bisphenol F is reacted with epichlorohydrin to form diglycidylether bisphenol F (DGEBF) resins. Because of the missing methyl groups, the viscosity of bisphenol F resins are typically 1/3 lower than the bisphenol A resins. Further the crosslinking is higher and as a result bisphenol F does not exhibit significant leaching and is therefore considered safe for food contact. However the lower viscosity typically results in a low functionality for spray application and heat and chemical resistance.

The present invention provides a spray applied coating formed using a bisphenol F resin that is formulated and mixed in such a manner that it allows spray application in high build coating while also exhibiting low sag. The base resin is preferably a Diglycidyl Ether of Bisphenol F resin. More preferably the resin is a low viscosity, liquid epoxy resin manufactured from epichlorohydrin and Bisphenol-F. The blended resin will exhibit improved crystallization resistance properties when compared to the neat, liquid, Bisphenol-A.

In addition to the base bisphenol F resin an air release agent is preferably employed to prevent foaming during mixing and application of the epoxy coating. This enhances application and provides a coating that is free from blisters and pinholes. Preferably an air release agent in the nature of a polysiloxane polymer blend is employed.

Also blended into the base resin is preferably a thixotropic agent such as a fumed silica. More preferably a thixotropic agent is employed in the form of a treated fumed silica such as a fumed silica treated with a dimethyl silicone fluid that replaces the surface hydroxyl groups with a polydimethyl-siloxane polymer rendering the silica hydrophobic.

Further, the coating material preferably includes a pigment such as a TiO2 to make application and verification of coating integrity easier.

Preferably the resin comprises between 80% and 99% bisphenol F resin, between 0.05% and 0.02% air release agent, between 2% and 6% thixotropic agent and between 1% and 4% pigment all by weight.

More preferably the resin comprises between 90% and 95% bisphenol F resin, between 0.02% and 0.03% air release agent, between 3% and 5% thixotropic agent and between 2% and 3% pigment all by weight.

The hardener component is preferably a cycloaliphatic amine. The hardener preferably does not contain phenol or benzyl alcohol. This facilitates a solvent free coating that is safe for food grade coatings.

In addition to the base hardener an air release agent is preferably employed to prevent foaming during mixing and application of the epoxy coating. This enhances application and provides a coating that is free from blisters and pinholes. Preferably an air release agent in the nature of a polysiloxane polymer blend is employed.

Also blended into the hardener is preferably a thixotropic agent such as a fumed silica. More preferably a thixotropic agent is employed in the form of a treated fumed silica such as a fumed silica treated with a dimethyl silicone fluid that replaces the surface hydroxyl groups with a polydimethyl-siloxane polymer rendering the silica hydrophobic.

Preferably the hardener comprises between 80% and 99% cycloaliphatic amine, between 0.05% and 0.02% air release agent and between 2% and 6% thixotropic agent all by weight.

More preferably the hardener comprises between 94% and 96% cycloaliphatic amine, between 0.04% and 0.02% air release agent and between 2% and 3% thixotropic agent all by weight.

In the present invention the base resin and hardener components are fully blended separate and apart from one another. The two components are then maintained separated until ready for direct application to the surface. In the prior art, the materials were mixed in small batches for application and then the mixed batches were brush or roller applied. In some cases the two components were mixed and then thinned or diluted with a solvent to a point where their viscosity allowed spray application. The difficulty in such cases is that the working time for the material is quite short once mixed requiring constant rebatching and, if spraying, cleaning of the spray equipment. Plus the addition of significant solvents makes spray application in closed environments dangerous to the worker making the application. Finally, the viscosity required for spray application results in a coating that is too thin to apply as a high build coating.

Generally, the base resin and hardener components are both very viscous and therefore difficult to pump. It has been found that the portions are easier to pump, and therefore easier to deliver to the spray device, if they are heated in a closed environment within the storage containers, and maintained in such a state all the way to the spray tip. This also facilitates more volumetrically-controlled delivery of each of the two portions of the compound to the spray device.

Accordingly, the teachings of this invention provide that both the base resin and hardener, in anticipation of application ne heated in a system generally includes means for heating the contents of the containers that hold the two components, for example by using temperature-controlled heaters. Recirculating pumps may be used in the containers to ensure mixing and uniform heating of the two portions. The heated hose may be heated by including an electrical resistance heating element for the hose and then using a temperature controlled power supply for the electrical resistance heating element to maintain an elevated compound temperature in the heated hose. The hoses may also be heated with steam. The hoses that carry the liquids from the containers to the mixing assembly should be insulated or possibly heated themselves as necessary to maintain the portions at an elevated temperature so they flow better, and for volume control at the spray gun.

The heated resin and hardener is mixed immediately prior to spray application in the sprayer itself. To reduce the viscosity of the components and enhance pumpability, the containers holding the resin and hardener components are maintained at an elevated temperature. Preferably, the components are maintained at about 170 degrees Fahrenheit to 220 degrees Fahrenheit. More preferably the components are maintained at about 180 degrees Fahrenheit to 190 degrees Fahrenheit.

It should be recognized that the teachings herein are merely illustrative and are not limiting of the invention. Further, one skilled in the art will recognize that additional components, configurations, arrangements and the like may be realized while remaining within the scope of this invention. For example, configurations and applications of dopants, curing time, layers and the like may be varied from embodiments disclosed herein. Generally, design and/or application of compounds and techniques for making use of the compounds are limited only by the needs of a system designer, manufacturer, operator and/or user and demands presented in any particular situation.

Various other components may be included and called upon for providing for aspects of the teachings herein. For example, additional materials, combinations of materials and/or omission of materials may be used to provide for added embodiments that are within the scope of the teachings herein.

In the present application a variety of embodiments are described. It is to be understood that any combination of any of these variables can define an embodiment of the invention. For example, a combination of a particular dopant material, with a particular compound, applied in a certain manner might not be expressly stated, but is an embodiment of the invention. Other combinations of articles, components, conditions, and/or methods can also be specifically selected from among variables listed herein to define other embodiments, as would be apparent to those of ordinary skill in the art.

While there is shown and described herein certain specific structure embodying the invention, it will be manifest to those skilled in the art that various modifications and rearrangements of the parts may be made without departing from the scope of the underlying inventive concept and that the same is not limited to the particular forms herein shown and described except insofar as indicated by the scope of the appended claims.

## Claims

1. A coating composition that is safe for food contact formed by the steps comprising:
providing a resin component containing primarily bisphenol F based resin, said resin component maintained at 76.7 °C (170 degrees Fahrenheit) to 104.4 °C (220 degrees Fahrenheit),
providing a hardener component containing primarily cycloaliphatic amine, said hardener component maintained at 76.7 °C (170 degrees Fahrenheit) to 104.4 °C (220 degrees Fahrenheit),
mixing said resin component and hardener component immediately prior to spray application, and
spray applying the mixture to form the coating composition.

2. The coating composition of Claim 1, the resin component comprising:
between 80% and 99% said bisphenol F based resin by weight;
between 0.05% and 0.02% air release agent by weight; and
between 2% and 6% thixotropic agent by weight.

3. The coating composition of Claim 2, the resin component further comprising:
between 1 % and 4% pigment by weight.

4. The coating composition of Claim 1, the resin component comprising:
between 90% and 95% bisphenol F resin by weight;
between 0.02% and 0.03% air release agent by weight,
between 3% and 5% thixotropic agent by weight; and
between 2% and 3% pigment by weight.

5. The coating composition of Claim 1, the hardener component comprising:
between 80% and 99% cycloaliphatic amine by weight;
between 0.05% and 0.02% air release agent by weight; and
between 2% and 6% thixotropic agent by weight.

6. The coating composition of Claim 1, the hardener component comprising:
between 94% and 96% cycloaliphatic amine by weight,
between 0.04% and 0.02% air release agent by weight; and
between 2% and 3% thixotropic agent by weight.

## Patentansprüche

1. Beschichtungszusammensetzung, die für Lebensmittelkontakt unbedenklich ist, durch die Schritte ausgebildet, umfassend:
Bereitstellen einer Harzkomponente, die hauptsächlich Harz auf Basis von Bisphenol F enthält, wobei die Harzkomponente auf 76,7 °C (170 Grad Fahrenheit) bis 104,4 °C (220 Grad Fahrenheit) gehalten wird,
Bereitstellen einer Härterkomponente, die hauptsächlich cycloaliphatisches Amin enthält, wobei die Härterkomponente auf 76,7 °C (170 Grad Fahrenheit) bis 104,4 °C (220 Grad Fahrenheit) gehalten wird,
Mischen der Harzkomponente und der Härterkomponente unmittelbar vor Sprühauftrag, und
Sprühauftragen der Mischung, um die Beschichtungszusammensetzung auszubilden.

2. Beschichtungszusammensetzung nach Anspruch 1, die Harzkomponente umfassend:
zu zwischen 80 Gew.-% und 99 Gew.-% das Harz auf Basis von Bisphenol F;
zwischen 0,05 Gew.-% und 0,02 Gew.-% Entlüftungsmittel; und
zwischen 2 Gew.-% und 6 Gew.-% Thixotropiermittel.

3. Beschichtungszusammensetzung nach Anspruch 2, die Harzkomponente ferner umfassend:
zwischen 1 Gew.-% und 4 Gew.-% Pigment.

4. Beschichtungszusammensetzung nach Anspruch 1, die Harzkomponente umfassend:
zwischen 90 Gew.-% und 95 Gew.-% Bisphenol-F-Harz;
zwischen 0,02 Gew.-% und 0,03 Gew.-% Entlüftungsmittel,
zwischen 3 Gew.-% und 5 Gew.-% Thixotropiermittel; und
zwischen 2 Gew.-% und 3 Gew.-% Pigment.

5. Beschichtungszusammensetzung nach Anspruch 1, die Härterkomponente umfassend:
zwischen 80 Gew.-% und 99 Gew.-% cycloaliphatisches Amin;
zwischen 0,05 Gew.-% und 0,02 Gew.-% Entlüftungsmittel; und
zwischen 2 Gew.-% und 6 Gew.-% Thixotropiermittel.

6. Beschichtungszusammensetzung nach Anspruch 1, die Härterkomponente umfassend:
zwischen 94 Gew.-% und 96 Gew.-% cycloaliphatisches Amin,
zwischen 0,04 Gew.-% und 0,02 Gew.-% Entlüftungsmittel; und
zwischen 2 Gew.-% und 3 Gew.-% Thixotropiermittel.

## Revendications

1. Composition de revêtement qui est sans danger pour le contact alimentaire formée par les étapes comprenant :
la fourniture d'un composant de résine contenant principalement une résine à base de bisphénol F, ledit composant de résine étant maintenu entre 76,7 °C (170 degrés Fahrenheit) et 104,4 °C (220 degrés Fahrenheit),
la fourniture d'un composant durcisseur contenant principalement une amine cycloaliphatique, ledit composant durcisseur étant maintenu entre 76,7 °C (170 degrés Fahrenheit) et 104,4 °C (220 degrés Fahrenheit),
le mélange dudit composant de résine et dudit composant durcisseur immédiatement avant une application par pulvérisation, et
l'application par pulvérisation du mélange pour former la composition de revêtement.

2. Composition de revêtement selon la revendication 1, le composant de résine comprenant :
entre 80 % et 99 % de ladite résine à base de bisphénol F en poids ;
entre 0,05 % et 0,02 % d'agent de désaération en poids ; et
entre 2 % et 6 % d'agent thixotrope en poids.

3. Composition de revêtement selon la revendication 2, le composant de résine comprenant en outre :
entre 1 % et 4 % de pigment en poids.

4. Composition de revêtement selon la revendication 1, le composant de résine comprenant :
entre 90 % et 95 % de résine de bisphénol F en poids ;
entre 0,02 % et 0,03 % d'agent de désaération en poids,
entre 3 % et 5 % d'agent thixotrope en poids ; et
entre 2 % et 3 % de pigment en poids.

5. Composition de revêtement selon la revendication 1, le composant durcisseur comprenant :
entre 80 % et 99 % d'amine cycloaliphatique en poids ;
entre 0,05 % et 0,02 % d'agent de désaération en poids ; et
entre 2 % et 6 % d'agent thixotrope en poids.

6. Composition de revêtement selon la revendication 1, le composant durcisseur comprenant :
entre 94 % et 96 % d'amine cycloaliphatique en poids,
entre 0,04 % et 0,02 % d'agent de désaération en poids ; et
entre 2 % et 3 % d'agent thixotrope en poids.
